# EUROPÄISCHE PATENTSCHRIFT

(11) **EP 3 820 805 B1**
(45) Veröffentlichungstag und Bekanntmachung des Hinweises auf die Patenterteilung: **15.06.2022**
(21) Anmeldenummer: 19801699.0
(22) Anmeldetag: 28.10.2019
(51) Int. Cl.: B66C 13/08, B66C 13/46, B66C 19/00

(54) **ZUVERLÄSSIGE ERKENNUNG VON CONTAINERKRAN UND GESCHIRR**
RELIABLE DETECTION OF CONTAINER CRANE AND CONTAINER SPREADER
DÉTECTION FIABLE DES GRUES À CONTENEURS ET PALLONIER DE CONTENEUR

(30) Priorität: 15.11.2018 EP 18206471
(43) Veröffentlichungstag der Anmeldung: 19.05.2021
(73) Patentinhaber: Siemens Aktiengesellschaft, 80333 München (DE)
(72) Erfinder: WALTHELM, Axel, 91054 Buckenhof (DE); DE CARVALHO FERREIRA, Fabricio, 91056 Erlangen (DE)
(86) Internationale Anmeldenummer: PCT/EP2019/079333
(87) Internationale Veröffentlichungsnummer: WO 2020/099104

(56) Entgegenhaltungen:
- EP-A1- 2 724 972
- EP-A1- 3 275 831
- DE-A1- 10 202 399

## Beschreibung

Die vorliegende Erfindung geht aus von einem Betriebsverfahren für einen Containerkran, wobei der Containerkran eine Laufkatze aufweist, die auf einer Traverse eines Portals des Containerkrans verfahrbar ist, wobei an der Laufkatze ein Geschirr zum Aufnehmen und Absetzen eines Containers angeordnet ist, wobei an der Laufkatze mindestens ein Laserscanner angeordnet ist,
- wobei mittels des Laserscanners ein Tiefenbild erfasst wird, das als Funktion eines ersten und eines zweiten Winkels jeweils den Abstand von dem Laserscanner mittels eines Laserstrahls erfassten Objektpunkten angibt,
- wobei das erfasste Tiefenbild mittels einer Auswertungseinrichtung ausgewertet wird, so dass anhand der Objektpunkte Objekte erkannt werden und deren Orte ermittelt werden,
- wobei die Objekte das Geschirr und/oder einen von dem Geschirr aufgenommenen Container und weitere Objekte umfassen,
- wobei anhand der erfassten Objektpunkte die Kontur des Geschirrs und/oder des von dem Geschirr aufgenommenen Containers ermittelt wird und
- wobei eine Steuereinrichtung des Containerkrans im Rahmen der Steuerung des Containerkrans die erkannten Objekte und deren Orte berücksichtigt.

Die vorliegende Erfindung geht weiterhin aus von einem Containerkran,
- wobei der Containerkran eine Laufkatze aufweist, die auf einer Traverse eines Portals des Containerkrans verfahrbar ist,
- wobei an der Laufkatze ein Geschirr zum Aufnehmen und Absetzen eines Containers angeordnet ist,
- wobei an der Laufkatze mindestens ein Laserscanner angeordnet ist, mittels dessen ein Tiefenbild erfassbar ist, das als Funktion eines ersten und eines zweiten Winkels jeweils den Abstand von dem Laserscanner mittels eines Laserstrahls erfassten Objektpunkten angibt,
- wobei der Containerkran eine Auswertungseinrichtung aufweist, von der das erfasste Tiefenbild derart ausgewertet wird, dass anhand der Objektpunkte Objekte erkannt werden und deren Orte ermittelt werden,
- wobei die Objekte das Geschirr und/oder einen von dem Geschirr aufgenommenen Container und weitere Objekte umfassen,
- wobei die Auswertungseinrichtung derart ausgebildet ist, dass sie anhand der erfassten Objektpunkte die Kontur des Geschirrs und/oder des von dem Geschirr aufgenommenen Containers ermittelt, und
- wobei der Containerkran eine Steuereinrichtung aufweist, welche im Rahmen der Steuerung des Containerkrans die erkannten Objekte und deren Orte berücksichtigt.

Die EP 2 724 972 A1 offenbart ein solches Betriebsverfahren bzw. einen solchen Containerkran.

Containerkräne können beispielsweise als Portalkräne oder als Containerbrücken ausgebildet sein. Sie können manuell, teilautomatisiert oder voll automatisiert betrieben werden. Beim vollautomatisierten oder teilautomatisierten Absetzen und Aufnehmen von Containern durch Portalkräne kommen häufig Laserscanner zum Einsatz. Mittels der Laserscanner werden von der Seite das jeweilige Geschirr, soweit vorhanden, der jeweilige Container und die Bereiche insbesondere unterhalb des Geschirrs und des Containers erfasst und ausgewertet. Dadurch können insbesondere Hindernisse, die sich unter dem Geschirr und dem Container befinden, rechtzeitig erkannt werden. Aufgrund der typischen Geometrie von Portalkränen ist es erforderlich, den Laserscanner relativ nahe an der Laufkatze anzuordnen. Dadurch "sieht" der Laserscanner den Container und das Geschirr. In vielen Fällen funktioniert die Auswertung des erfassten Tiefenbildes ordnungsgemäß. In manchen Fällen treten jedoch stark gehäuft Reflexionen auf, insbesondere an den Wänden des von dem Geschirr aufgenommenen Containers. Das Problem tritt insbesondere bei Nässe und bei einer glänzenden Lackierung des Containers auf. Derartige Reflexionen führen zu fehlerhaften Abstandsmessungen. Derartige Abstandsmessungen können zu einer - fehlerhaften - Auswertung dahingehend führen, dass unter dem Geschirr und unter dem Container ein Hindernis vermutet wird, obwohl das Hindernis gar nicht vorhanden ist. Die Korrektur derart fehlerhafter Messungen und Auswertungen ist in automatisierter Weise im Stand der Technik oftmals nicht möglich. Zur Vermeidung von Unfällen und Schäden wird daher der automatisierte Betrieb - insbesondere das automatisierte Absetzen eines Containers - oftmals unterbrochen. Das Absetzen des Containers muss in diesem Fall von einer Bedienperson manuell gesteuert werden. Zumindest muss die Bedienperson explizit eine Freigabe zur Fortsetzung des automatisierten Betriebs des Containerkrans geben.

Die Aufgabe der vorliegenden Erfindung besteht darin, Möglichkeiten zu schaffen, aufgrund derer trotz des Auftretens von Reflexionen zumindest im Regelfall eine korrekte Erkennung von Hindernissen möglich ist. Insbesondere sollen Reflexionen, die in fehlerhafter Weise zu einer Erkennung eines scheinbaren Hindernisses unter dem Geschirr oder dem Container - also eines tatsächlich nicht vorhandenen Hindernisses - führen, so weit wie möglich vermieden werden.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 7.

Erfindungsgemäß wird ein Betriebsverfahren der eingangs genannten Art dadurch ausgestaltet, dass eine Erkennung der weiteren Objekte innerhalb von durch die ermittelte Kontur definierten Bereichen unterdrückt wird.

Die Erfindung beruht auf der Erkenntnis, dass fehlerhafte Messungen im vertikalen Verfahrbereich des Containers nur durch Reflexionen am Geschirr oder am Container hervorgerufen werden können. Durch die vorherige Lokalisierung des Containers und des Geschirrs können daher Messungen, die in diesem Bereich liegen und deutlich größere Abstände als eigentlich erwartet aufweisen, als Reflexionen identifiziert und von der weitergehenden Auswertung ausgeschlossen werden. Insbesondere können Nachbarschaftsbeziehungen genutzt werden, um einzelne "Ausreißer" zu ermitteln und im weiteren Verlauf unberücksichtigt zu lassen.

Die Ermittlung der Kontur des Geschirrs und/oder des von dem Geschirr aufgenommenen Containers kann auf besonders einfache und effiziente Weise dadurch implementiert werden, dass das erfasste Tiefenbild oder ein daraus abgeleitetes Bild zunächst einer ersten mathematischen morphologischen Operation unterzogen wird, so dass in dem erfassten Tiefenbild oder dem daraus abgeleitetes Bild Objekte mit einer Größe unterhalb einer ersten Maximalgröße ausgefiltert werden, und dass sodann die Ermittlung der Kontur des Geschirrs und/oder des von dem Geschirr aufgenommenen Containers anhand des der ersten morphologischen Operation unterzogenen Bildes erfolgt.

Die erste mathematische morphologische Operation kann insbesondere eine morphologische Dilatation und eine auf die morphologische Dilatation folgende morphologische Erosion sein. Alternativ kann auch die umgekehrte Reihenfolge ergriffen werden. In beiden Fällen wird jedoch zur morphologischen Dilatation ein Filterkern verwendet, der dieselbe Größe aufweist wie der im Rahmen der morphologischen Erosion verwendete Filterkern. Dieser Filter wirkt also gleichartig für beide morphologische Teiloperationen der ersten mathematischen morphologischen Operation.

Zum Unterdrücken der Erkennung der weiteren Objekte innerhalb der durch die ermittelte Kontur definierten Bereiche wird das der ersten mathematischen morphologischen Operation unterzogene Bild vorzugsweise einer zweiten mathematischen morphologischen Operation unterzogen, so dass in dem der ersten mathematischen morphologischen Operation unterzogenen Bild Objekte mit einer Größe unterhalb einer zweiten Maximalgröße ausgefiltert werden. Diese Vorgehensweise führt mit geringem Rechenaufwand zu einer sehr zuverlässigen Unterdrückung der entsprechenden weiteren Objekte.

Die zweite mathematische morphologische Operation kann eine morphologische Dilatation und eine auf die morphologische Dilatation folgende Erosion sein. Alternativ kann es sich um eine morphologische Erosion und eine auf die morphologische Erosion folgende morphologische Dilatation handeln. In beiden Fällen wird jedoch zur morphologischen Dilatation ein Filterkern verwendet, der dieselbe Größe aufweist wie der im Rahmen der morphologischen Erosion verwendete Filterkern. Dieser Filter wirkt also gleichartig für beide morphologische Teiloperationen der zweiten mathematischen morphologischen Operation. Weiterhin ist im Rahmen der zweiten mathematischen morphologischen Operation die Reihenfolge von morphologischer Erosion und morphologischer Dilatation invers zu der Reihenfolge von morphologischer Erosion und morphologischer Dilatation im Rahmen der ersten mathematischen morphologischen Operation.

Die Größe der im Rahmen der zweiten mathematischen morphologischen Operation verwendeten Filterkerne kann in Einzelfällen mit der Größe der im Rahmen der ersten mathematischen morphologischen Operation verwendeten Filterkerne identisch sein. In der Regel sind die Größen jedoch voneinander verschieden. Insbesondere können die im Rahmen der zweiten mathematischen morphologischen Operation verwendeten Filterkerne eine größere Größe aufweisen als die im Rahmen der ersten mathematischen morphologischen Operation verwendeten Filterkerne.

Das erfindungsgemäße Betriebsverfahren ist sehr robust. Insbesondere kann es somit auch dann ausgeführt werden, während es in der Umgebung des Containerkrans regnet oder schneit.

Die Aufgabe wird weiterhin durch einen Containerkran mit den Merkmalen des Anspruchs 8 gelöst. Vorteilhafte Ausgestaltungen des Containerkrans sind Gegenstand der abhängigen Ansprüche 9 bis 13.

Erfindungsgemäß wird ein Containerkran der eingangs genannten Art dadurch ausgestaltet, dass die Auswertungseinrichtung derart ausgebildet ist, dass sie eine Erkennung der weiteren Objekte innerhalb von durch die ermittelte Kontur definierten Bereichen unterdrückt.

Die dadurch bewirkten Vorteile korrespondieren mit denen des Betriebsverfahrens.

Die vorteilhaften Ausgestaltungen des Containerkrans korrespondieren mit denen des Betriebsverfahrens. Auch die hierdurch jeweils erzielten Vorteile sind dieselben.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Containerkran,
- FIG 2: den Containerkran von FIG 1 von der Seite,
- FIG 3: einen Erfassungsbereich eines Tiefenbildes,
- FIG 4: ein Tiefenbild,
- FIG 5: eine mögliche Zeile des Tiefenbildes von FIG 4,
- FIG 6: eine mögliche Spalte des Tiefenbildes von FIG 4,
- FIG 7: den Containerkran von FIG 1 in Verbindung mit einer Reflexion,
- FIG 8: eine steuerungstechnische Struktur des Containerkrans,
- FIG 9: ein Ablaufdiagramm,
- FIG 10 bis 14: jeweils einen Verlauf eines ersten Winkels als Funktion eines zweiten Winkels,

- FIG 15: ein Ablaufdiagramm,
- FIG 16 bis 20: modifizierte Tiefenbilder.

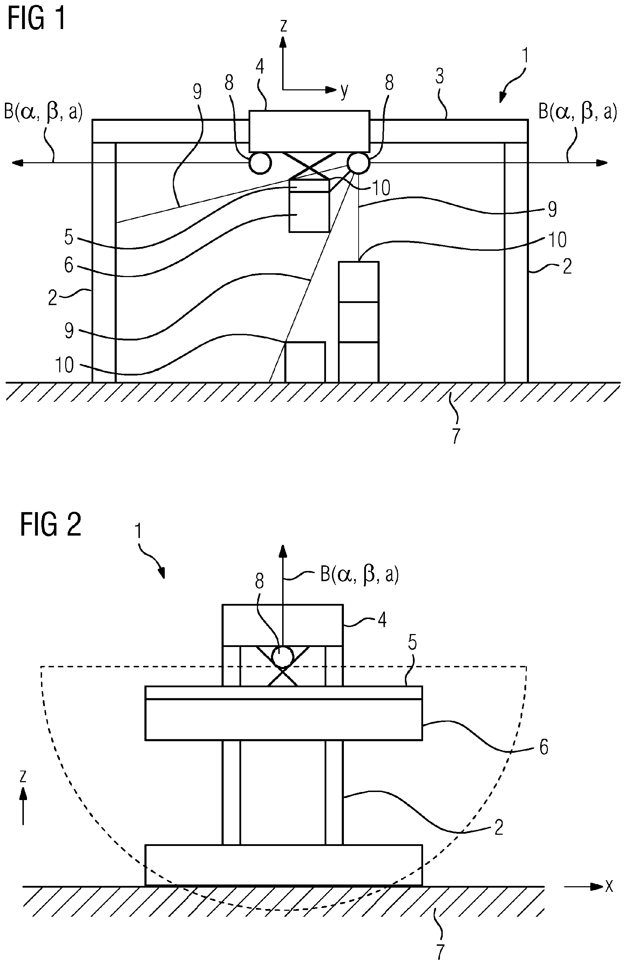

Gemäß den FIG 1 und 2 weist ein Containerkran ein Portal 1 auf. Das Portal 1 weist zwei Stützen 2 auf, die über eine Traverse 3 miteinander verbunden sind. Der Containerkran kann als Containerbrücke oder anderer Portalkran ausgebildet sein. Die Stützen 1 sind in einer Verfahrrichtung x des Containerkrans verfahrbar. Die Richtung x wird nachfolgend, weil in ihr der Containerkran als Ganzes verfahren wird, als Kranrichtung x bezeichnet. Auf der Traverse 3 ist eine Laufkatze 4 des Containerkrans verfahrbar. Die Richtung, in welcher die Laufkatze 4 verfahrbar ist, wird nachfolgend als Laufkatzenrichtung bezeichnet und mit dem Bezugszeichen y versehen. Die Laufkatzenrichtung y ist orthogonal zur Kranrichtung x. Sowohl die Kranrichtung x als auch die Laufkatzenrichtung y sind im Regelfall horizontal orientiert.

An der Laufkatze 4 ist ein Geschirr 5 angeordnet. Das Geschirr 5 dient dem Aufnehmen und Absetzen eines Containers 6. Das Geschirr 5 kann insbesondere einen sogenannten Spreader und die zugehörigen Seile zum Heben und Senken des Spreaders umfassen. Das Geschirr 5 kann relativ zu einem Untergrund 7, auf dem der Containerkran als Ganzes verfahren werden kann, in vertikaler Richtung z angehoben und abgesenkt werden. Dies gilt unabhängig davon, ob von dem Geschirr 5 ein Container 6 aufgenommen ist oder nicht und demzufolge der Container 6 mit angehoben oder abgesenkt wird.

An der Laufkatze 4 ist mindestens ein Laserscanner 8 angeordnet. In der Regel sind entsprechend der Darstellung in den FIG 1 und 2 zwei Laserscanner 8 vorhanden. Insbesondere sind die beiden Laserscanner 8 in der Regel derart angeordnet dass sich das Geschirr 5 und gegebenenfalls der Container 6 in Laufkatzenrichtung y gesehen zwischen den beiden Laserscannern 8 befindet bzw. befinden und dass weiterhin in Kranrichtung x gesehen die beiden Laserscanner 8 sich in etwa in der Mitte der Traverse 3 befinden. Mittels der Laserscanner 8 erfasste Bilder B werden jedoch unabhängig voneinander ausgewertet. Nachfolgend wird daher nur der Betrieb eines der Laserscanner 8 näher erläutert, nämlich der Betrieb des in FIG 1 rechten Laserscanners 8. Der Betrieb des anderen Laserscanners 8 erfolgt auf analoge Weise.

Der Laserscanner 8 arbeitet derart, dass ein von dem Laserscanner 8 emittierter Laserstrahl 9 bei einer Vielzahl von Werten eines ersten Winkels α jeweils über einen Winkelbereich eines zweiten Winkels β verschwenkt wird. Während des Verschwenkens über den zweiten Winkel β kann bei einer Vielzahl von Werten des zweiten Winkels β beispielsweise jeweils die Laufzeit zwischen dem Emittieren des Laserstrahls 9 und dem Empfang des reflektierten Laserstrahls erfasst und daraus in Verbindung mit der bekannten Lichtgeschwindigkeit der Abstand eines jeweils erfassten Objektpunkts 10 ermittelt werden. Diese Vorgehensweise ist Fachleuten allgemein bekannt. Es sind aber auch andere, Fachleuten allgemein bekannte Möglichkeiten zur Abstandsermittlung anwendbar.

Der erste Winkel α liegt vorzugsweise in der yz-Ebene. Es handelt sich also im wesentlichen um einen Polarwinkel. Wenn mit 0° die Vertikale bezeichnet wird, positive Werte des Winkels α auf den Container 6 zu gerichtet sind und negative Werte des Winkels α demzufolge vom Container 6 abgewandt sind, erstreckt sich der von dem ersten Winkel α überdeckte Winkelbereich entsprechend der Darstellung in FIG 1 vorzugsweise von einem geringfügig unter 0° liegenden Wert - beispielsweise -5° oder -10° - zu einem deutlich oberhalb von 0° liegenden Wert - beispielsweise 45° oder 60°. Der zweite Winkel β erstreckt sich derart, dass der von ihm überdeckte Winkelbereich die yz-Ebene orthogonal schneidet. In der Regel erstreckt sich dieser Winkelbereich entsprechend der Darstellung FIG 2 symmetrisch zur yz-Ebene über einen Halbkreis oder nahezu einen Halbkreis. Wenn der Laserstrahl 9 für einen Wert des zweiten Winkels β von 0° in der yz-Ebene liegt, kann sich dieser Winkelbereich beispielsweise von -90° bis +90° oder von -80° bis +80° erstrecken. Es sind aber auch Ausgestaltungen möglich, bei denen der zweite Winkel β einen Winkelbereich überdeckt, der deutlich kleiner als 180° ist oder umgekehrt sogar größer als 180° ist.

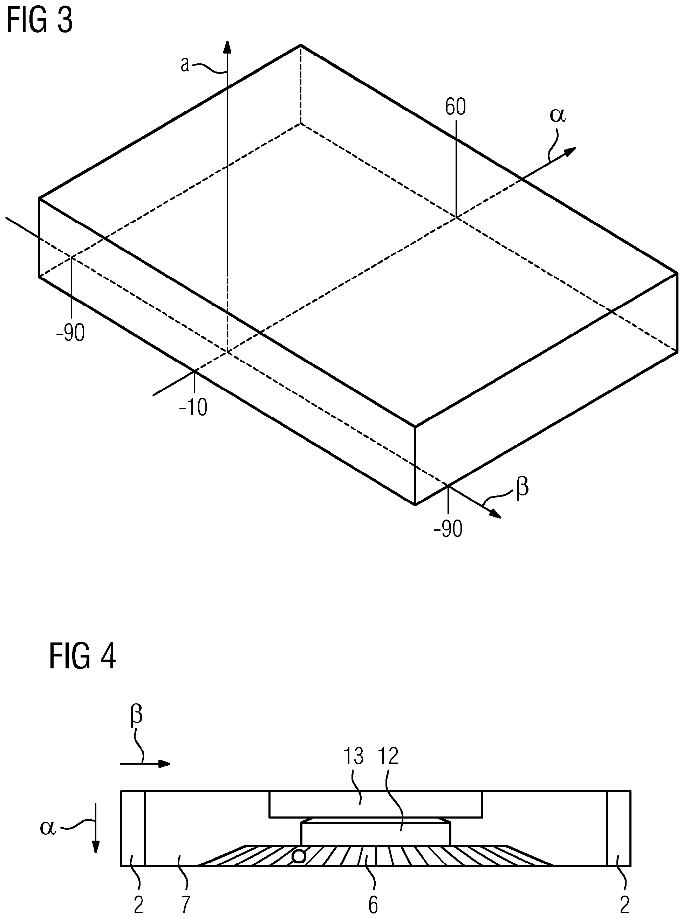

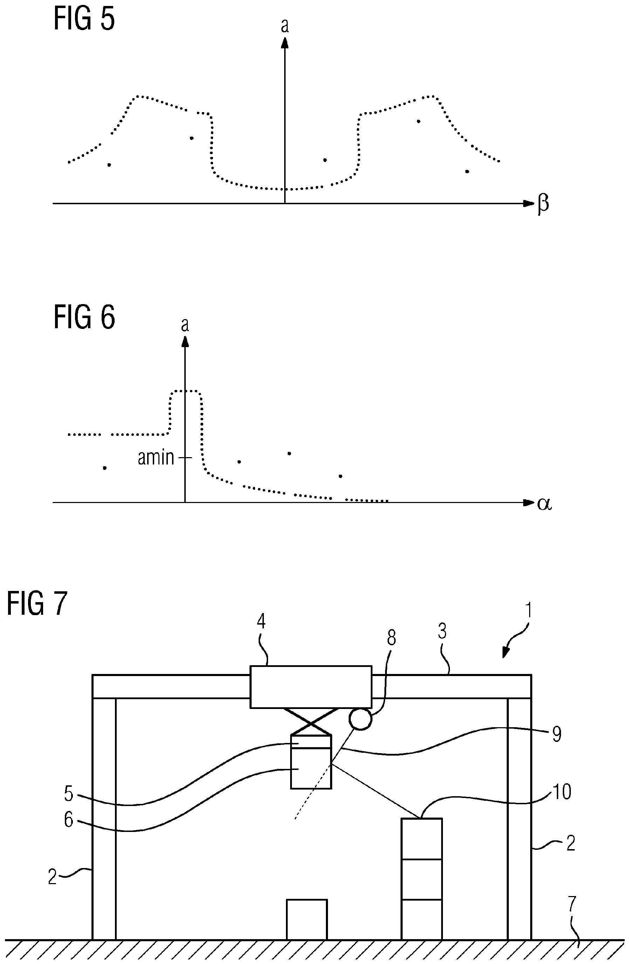

Aufgrund des Umstands, dass in dem mittels des Laserscanners 8 erfassten jeweiligen Bild B auch die Information über den Abstand a des jeweils erfassten Objektpunktes 10 enthalten ist, handelt es sich bei dem jeweiligen Bild B um ein Tiefenbild. Das Tiefenbild B gibt also entsprechend der Darstellung in den FIG 3 bis 6 für den ersten und den zweiten Winkel α, β jeweils den Abstand a der erfassten Objektpunkte 10 vom Laserscanner 8 an. FIG 3 zeigt schematisch für einen (rein theoretisch einheitlichen) Abstand a den Erfassungsbereich des ersten Winkels α und den Erfassungsbereich des zweiten Winkels β. Die in FIG 3 angegebenen Zahlenwerte liegen zwar in typischen Wertebereichen, sind aber rein beispielhaft und dienen lediglich der Veranschaulichung. FIG 4 zeigt ein mögliches Tiefenbild B. FIG 5 zeigt einen möglichen Verlauf des Abstandes a für eine Zeile des Tiefenbildes B von FIG 4, also den Abstand a als Funktion des zweiten Winkels β für einen bestimmten, konstant gehaltenen ersten Winkel α. FIG 6 zeigt umgekehrt einen möglichen Verlauf des Abstandes a für eine Spalte des Tiefenbildes B von FIG 4, also den Abstand a als Funktion des ersten Winkels α für einen bestimmten, konstant gehaltenen zweiten Winkel β. Aus den FIG 5 und 6 ist insbesondere erkennbar, dass die Ortsauflösung in den Winkeln α und β hoch ist. Beispielsweise kann eine Abtastung in beiden Winkeln α, β mit einer Schrittweite von 1° erfolgen. Die genannte Schrittweite kann aber auch einen anderen Wert aufweisen, beispielsweise 0,1°, 0,2° oder 0,5°. Weiterhin kann sie auch für den ersten und den zweiten Winkel α, β voneinander verschiedene Werte aufweisen. Aus den Darstellungen der FIG 5 und 6 ist weiterhin ersichtlich, dass die Erfassung der Abstände a nicht ideal ist, sondern dass ab und zu "Ausreißer" sowohl nach oben als auch nach unten, also sowohl zu größeren als auch zu kleineren Abständen a hin erfolgen. Die "Ausreißer" zu kleineren Abständen hin können beispielsweise durch Regentropfen oder Schneeflocken hervorgerufen werden. Die "Ausreißer" zu größeren Abständen hin können insbesondere durch Reflexionen am Geschirr 5 und am Container 6 hervorgerufen werden. Ein Beispiel einer derartigen Reflexion ist in FIG 7 dargestellt. In FIG 7 ist gestrichelt weiterhin dargestellt, an welchem Ort in diesem Fall im Stand der Technik in fehlerhafter Weise ein tatsächlich nicht vorhandenes Objekt erkannt werden würde.

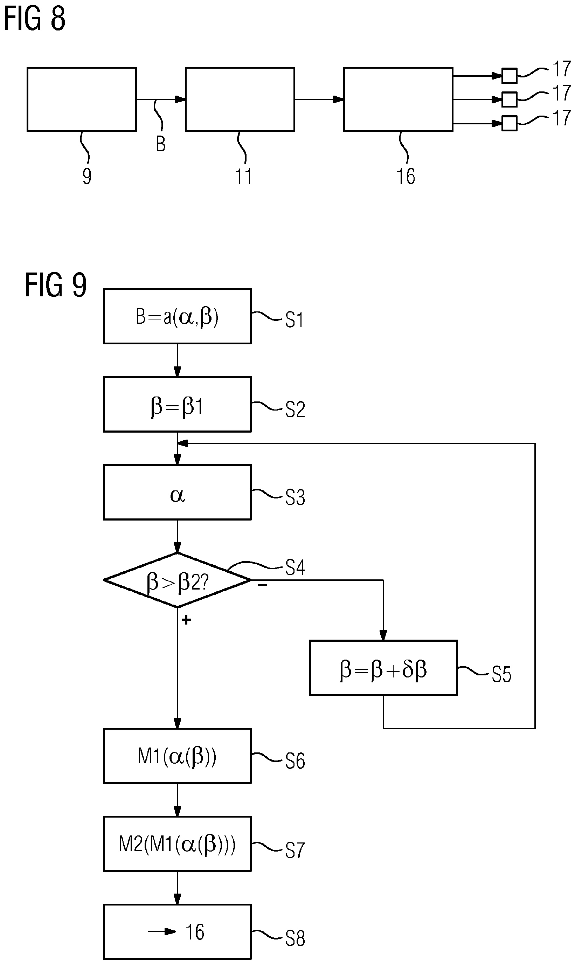

Gemäß FIG 8 wird das erfasste Tiefenbild B von dem Laserscanner 8 einer Auswertungseinrichtung 11 zugeführt. Die Auswertungseinrichtung 11 wertet das Tiefenbild B aus. Insbesondere erkennt die Auswertungseinrichtung 11 anhand der Objektpunkte 10 Objekte und ermittelt deren Orte. Beispielsweise kann die Auswertungseinrichtung 11 - siehe FIG 1 - den Container 12 direkt unterhalb der Laufkatze 4 erkennen und dessen Ort ermitteln. Auch kann die Auswertungseinrichtung 11 denjenigen Container 13 erkennen und dessen Ort ermitteln, der sich auf Seiten des Laserscanners 8 neben diesem Container 12 befindet. Auch die Erkennung anderer Objekte - beispielsweise des Untergrunds 7 - ist möglich. Vor allem aber kann die Auswertungseinrichtung 11 den Container 6 und das Geschirr 5 erkennen. Im Rahmen der Auswertung des Tiefenbildes B kann die Auswertungseinrichtung 11 insbesondere mit berücksichtigen, dass ihr vorab bekannt ist, auf welcher Seite des Tiefenbildes B (nämlich zu hohen Werten des ersten Winkels α hin) sich das Geschirr 5 und der Container 6 befinden müssen.

Die entsprechenden Vorgehensweisen zur Erkennung der verschiedenen Objekte sind an und für sich bekannt. Sie müssen daher nicht im Detail erläutert werden. Im vorliegenden Fall ist jedoch von Bedeutung, auf welche Weise anhand der erfassten Objektpunkte 10 die Kontur des Geschirrs 5 und/oder des von dem Geschirr 5 aufgenommenen Containers 6 ermittelt wird und auf welche Art und Weise fehlerhafte Bestimmungen von Objekten ausgemerzt werden.

Insbesondere arbeitet die Auswertungseinrichtung 11 entsprechend der Darstellung in FIG 9 wie folgt:
In einem Schritt S1 nimmt die Auswertungseinrichtung 11 ein Tiefenbild B entgegen. Das Tiefenbild B enthält, wie bereits erwähnt, den Verlauf des Abstandes a als Funktion der beiden Winkel a, β.

In einem Schritt S2 setzt die Auswertungseinrichtung 11 den zweiten Winkel β auf einen Anfangswert β1 und selektiert dadurch sozusagen eine Spalte des in FIG 4 dargestellten Tiefenbildes B. Der Anfangswert β1 kann beispielsweise in der Darstellung von FIG 4 dem linken Rand des dortigen Tiefenbildes B entsprechen. In einem Schritt S3 bestimmt die Auswertungseinrichtung 11 - gültig nur für die selektierte Spalte - einen ersten Winkel α. Insbesondere durchsucht die Auswertungseinrichtung 11 die selektierte Spalte des Tiefenbildes B nach demjenigen Wert des ersten Winkels α, bei dem - vorläufig - die Kante des Containers 6 vermutet wird. Die Implementierung des Schrittes S3 kann beispielsweise derart erfolgen, dass ausgehend von dem Minimalwert des ersten Winkels α zu größeren Werten des ersten Winkels α hin derjenige erste Winkel α bestimmt wird, bei dem erstmals ein Abstand a unter einem vorbestimmten Minimalabstand amin (siehe FIG 6) ermittelt wird. Im einfachsten Fall ist der vorbestimmte Minimalabstand amin eine Konstante. Bei hinreichender Kenntnis des Systems kann der vorbestimmte Minimalabstand amin jedoch auch eine Variable sein. Alternativ ist es möglich, den Schritt S3 derart zu implementieren, dass ausgehend von dem Minimalwert des ersten Winkels α zu größeren Werten des ersten Winkels α hin derjenige erste Winkel α bestimmt wird, bei dem erstmals ein hinreichend großer Sprung von einem größeren zu einem kleineren Abstand auftritt. Auch Kombinationen dieser beiden Vorgehensweisen sind denkbar.

In einem Schritt S4 prüft die Auswertungseinrichtung 11, ob der zweite Winkel β einen Endwert β2 überschritten hat. Solange dies nicht der Fall ist, geht die Auswertungseinrichtung 11 zu einem Schritt S5 über, in dem die Auswertungseinrichtung 11 den zweiten Winkel β um eine Schrittweite δβ erhöht. Der Endwert β2 kann beispielsweise in der Darstellung von FIG 4 dem rechten Rand des dortigen Tiefenbildes B entsprechen. Die Schrittweite δβ kann insbesondere mit der Ortsauflösung des zweiten Winkels β übereinstimmen. Vom Schritt S5 aus geht die Auswertungseinrichtung zum Schritt S3 zurück.

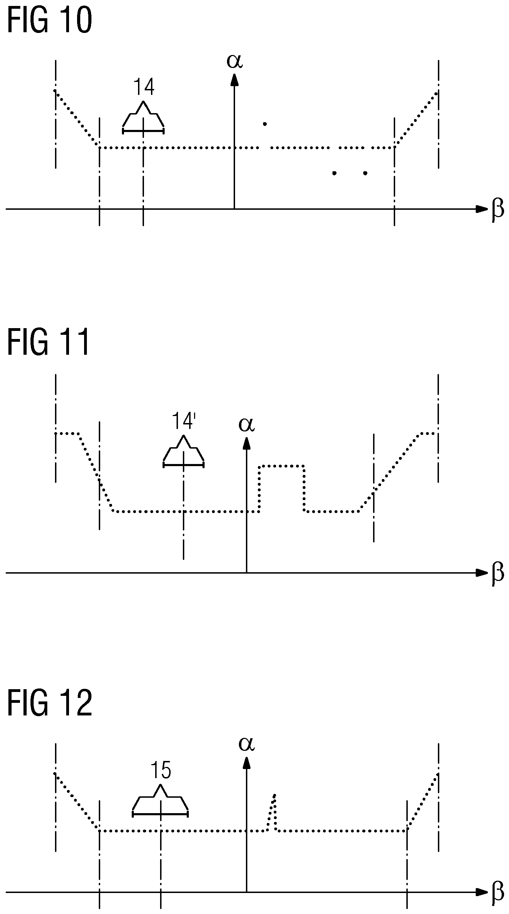

Durch die wiederholte Ausführung des Schrittes S3 für verschiedene Werte des zweiten Winkels β wird somit nach und nach eine (vorläufige) Konturlinie ermittelt, die als Funktion des zweiten Winkels β den jeweiligen Wert des ersten Winkels α zeigt. FIG 10 zeigt beispielhaft eine mögliche vorläufige Konturlinie. Die Werte des zweiten Winkels β, bei denen die Endpunkte der Konturlinie und die beiden Knickpunkte der Konturlinie liegen, sind in FIG 10 mit vertikalen gestrichelten Linien angedeutet. Die vertikalen gestrichelten Linien in den FIG 11 bis 14 korrespondieren jeweils mit diesen Werten des zweiten Winkels β. Die weitergehenden Maßnahmen zur Erkennung der (endgültigen) Konturlinie bauen auf der ermittelten vorläufigen Konturlinie auf. Die nunmehr ermittelte vorläufige Konturlinie ist somit ein Beispiel eines aus dem erfassten Tiefenbild B abgeleiteten Bildes.

Zur Ermittlung der endgültigen Konturlinie und damit im Ergebnis auch der Kontur unterzieht die Auswertungseinrichtung 11 die aus dem erfassten Tiefenbild B abgeleitete vorläufige Konturlinie in einem Schritt S6 einer ersten mathematischen morphologischen Operation M1. Durch die erste mathematische morphologische Operation M1 werden in der aus dem erfassten Tiefenbild B abgeleiteten vorläufigen Konturlinie Objekte ausgefiltert, die einerseits außerhalb des von dem Geschirr 5 und/oder dem Container 6 abgedeckten Winkelbereichs liegen und andererseits eine Größe unterhalb einer ersten Minimalgröße aufweisen. Theoretisch können durch die Vorgehensweise des Schrittes S6 auch Objekte ausgefiltert werden, die innerhalb des von dem Geschirr 5 und/oder dem Container 6 abgedeckten Winkelbereichs liegen und eine Größe unterhalb einer ersten Minimalgröße aufweisen. Derartige Objekte kommen in der Praxis jedoch nicht vor.

Die erste mathematische morphologische Operation M1 kann insbesondere ein sogenanntes Öffnen oder ein sogenanntes Schließen sein. In beiden Fällen besteht die erste mathematische morphologische Operation M1 aus zwei nacheinander ausgeführten Teilschritten.

Der erste Teilschritt ist eine morphologische Erosion oder eine morphologische Dilatation. Beispielsweise kann entsprechend der Darstellung in FIG 10 für jeden Wert des zweiten Winkels β innerhalb eines ersten Filterkerns 14 (siehe FIG 10) jeweils der maximale Wert des ersten Winkels α herangezogen werden und für diesen Wert des zweiten Winkels β als modifizierter Wert des ersten Winkels α für den zweiten Teilschritt herangezogen werden. Der erste Filterkern 14 weist üblicherweise eine Größe auf, die ein relativ geringes Vielfaches der Schrittweite δβ ist. Beispielsweise können - ausgehend vom jeweiligen Wert des zweiten Winkels β - zu kleineren und größeren Werten des zweiten Winkels β zusätzlich zum Wert des ersten Winkels α je zwei oder je drei weitere Werte mit herangezogen werden. FIG 11 zeigt rein beispielhaft ein mögliches Ergebnis nach dem ersten Teilschritt der ersten mathematischen morphologischen Operation M1.

Der zweite Teilschritt ist invers zum ersten Teilschritt. Wenn der erste Teilschritt eine morphologische Dilatation ist, ist der zweite Teilschritt eine morphologische Erosion. Wenn umgekehrt der erste Teilschritt eine morphologische Erosion ist, ist der zweite Teilschritt eine morphologische Dilatation. In jedem Fall aber wird im Rahmen des zweiten Teilschrittes ein Filterkern 14' verwendet, der dieselbe Größe aufweist wie der Filterkern 14 beim ersten Teilschritt. FIG 12 zeigt rein beispielhaft ein mögliches Ergebnis nach dem zweiten Teilschritt der ersten mathematischen morphologischen Operation M1. Ersichtlich erfolgt durch die erste mathematische morphologische Operation M1 eine deutliche Glättung der vorläufigen Konturlinie.

Mittels der ersten mathematischen morphologischen Operation M1 werden Störungen ausgefiltert, bei denen der Laserstrahl 9 bei zu kleinen ersten Winkeln α an kleinen Objekten - beispielsweise Regentropfen oder Schneeflocken - zum Laserscanner 8 zurück reflektiert wurde. Das Ausfiltern derartiger Störungen erfolgt nur bis zu einer ersten Maximalgröße der Störungen. Diese Größe ist durch die Größe der ersten Filterkerne 14, 14' bestimmt.

Die Kontur des Geschirrs 5 und des Containers 6 ist damit vom Ansatz her bestimmt. Die exakte Kontur kann nunmehr auf übliche Art und Weise bestimmt werden. Derartige Vorgehensweisen sind Fachleuten allgemein bekannt.

Mittels der ersten mathematischen morphologischen Operation M1 werden hingegen noch keine Störungen ausgefiltert, bei denen der Laserstrahl 9 am Container 6 oder am Geschirr 5 derart reflektiert wurde, dass er nicht direkt zum Laserscanner 8 zurück reflektiert wurde, sondern erst nach einer weiteren Reflexion oder Streuung an einem anderen Objekt zum Laserscanner 8 zurück reflektiert wurde. FIG 12 zeigt rein beispielhaft eine derartige Reflexion. Derartige Reflexionen sind insbesondere dann problematisch, wenn sie im Randbereich des Containers 6 oder des Geschirrs 5 auftreten und die vorläufige Konturlinie dadurch in nur relativ geringem Umfang verfälschen.

Zur Unterdrückung derartiger Reflexionen und damit im Ergebnis einer Unterdrückung einer Erkennung von weiteren Objekten innerhalb von durch die ermittelte Kontur definierten Bereichen unterzieht die Auswertungseinrichtung 11 die im Schritt S6 ermittelte Konturlinie in einem Schritt S7 einer zweiten mathematischen morphologischen Operation M2. Durch die zweite mathematische morphologische Operation M2 werden die entsprechenden weiteren Objekte unterdrückt.

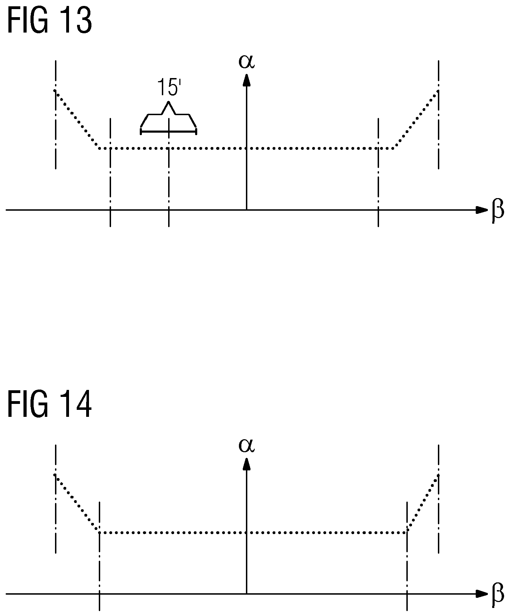

Die zweite mathematische morphologische Operation M2 kann - analog zur ersten mathematischen morphologischen Operation M1 - insbesondere aus zwei nacheinander ausgeführten Teilschritten bestehen. In diesem Fall ist - wie zuvor bei der ersten mathematischen morphologischen Operation M1 - der erste Teilschritt eine morphologische Dilatation oder eine morphologische Erosion und der zweite Teilschritt die inverse Operation. Im Unterschied zur ersten mathematischen morphologischen Operation M1 werden entsprechend der Darstellung in den FIG 12 und 13 jedoch zweite Filterkerne 15, 15' verwendet. Weiterhin ist die Reihenfolge der beiden Teilschritte invers zu der Reihenfolge der beiden Teilschritte der ersten mathematischen morphologischen Operation M1. FIG 13 zeigt rein beispielhaft ein mögliches Ergebnis nach dem ersten Teilschritt der zweiten mathematischen morphologischen Operation M2, FIG 14 ein mögliches Ergebnis nach dem zweiten Teilschritt der zweiten mathematischen morphologischen Operation M2. Ersichtlich erfolgt durch die zweite mathematische morphologische Operation M2 eine weitere Glättung der vorläufigen Konturlinie.

Die zweiten Filterkerne 15, 15' weisen untereinander eine einheitliche Größe auf. Sie können im Einzelfall dieselbe Größe aufweisen wie die ersten Filterkerne 14, 14'. Im Regelfall weisen die zweiten Filterkerne 15, 15' jedoch eine andere Größe auf als die erste Filterkerne 14, 14'. Insbesondere können sie größer als die ersten Filterkerne 14, 14' sein.

Mittels der zweiten mathematischen morphologischen Operation M2 wird die Erkennung von weiteren Objekten innerhalb von durch die ermittelte Kontur definierten Bereichen unterdrückt. Die Unterdrückung der weiteren Objekte erfolgt nur bis zu einer zweiten Maximalgröße der weiteren Objekte. Diese Größe ist durch die Größe der zweiten Filterkerne 15, 15' bestimmt.

Mittels der zweiten mathematischen morphologischen Operation M2 werden also insbesondere diejenigen Störungen ausgefiltert, die im Tiefenbild B auf der Containerseite bzw. Innenseite an die Kontur angrenzen und bei denen der Laserstrahl 9 am Container 6 oder am Geschirr 5 derart reflektiert wurde, dass er nicht direkt zum Laserscanner 8 zurück reflektiert wurde, sondern erst nach einer weiteren Reflexion oder Streuung an einem anderen Objekt zum Laserscanner 8 zurück reflektiert wurde.

Aufgrund des Umstands, dass die Reihenfolge von Erosion und Dilatation im Rahmen der zweiten mathematischen morphologischen Operation M2 invers zu der Reihenfolge von Erosion und Dilatation im Rahmen der ersten mathematischen morphologischen Operation M1 ist, wirkt die zweite mathematische morphologische Operation M2 im Ergebnis nur innerhalb der Kontur, die im Rahmen der ersten mathematischen morphologischen Operation M1 ermittelt wurde. Das nunmehrige Ergebnis enthält somit nunmehr - zumindest in der Regel - insbesondere keine fehlerhaft erkannten scheinbaren Objekte, die nur aufgrund von Reflexionen am Container 6 oder am Geschirr 5 entstanden sein können.

Die Auswertungseinrichtung 11 übermittelt ihre Ergebnisse in einem Schritt S8 an eine Steuereinrichtung 16 des Containerkrans. Die Steuereinrichtung 16 ist somit entsprechend der Darstellung in FIG 8 in der Lage, diese Informationen im Rahmen der Ansteuerung des Containerkrans - insbesondere im Rahmen der Ansteuerung von Antrieben 17 des Containerkrans - zu berücksichtigen. Mittels der Antriebe 17 werden insbesondere der Containerkran als Ganzes in der Kranrichtung x verfahren, wird die Laufkatze 4 auf der Traverse 3 in der Laufkatzenrichtung y verfahren und wird das Geschirr 5 (mit oder ohne Container 6) in der Vertikalen angehoben und abgesenkt.

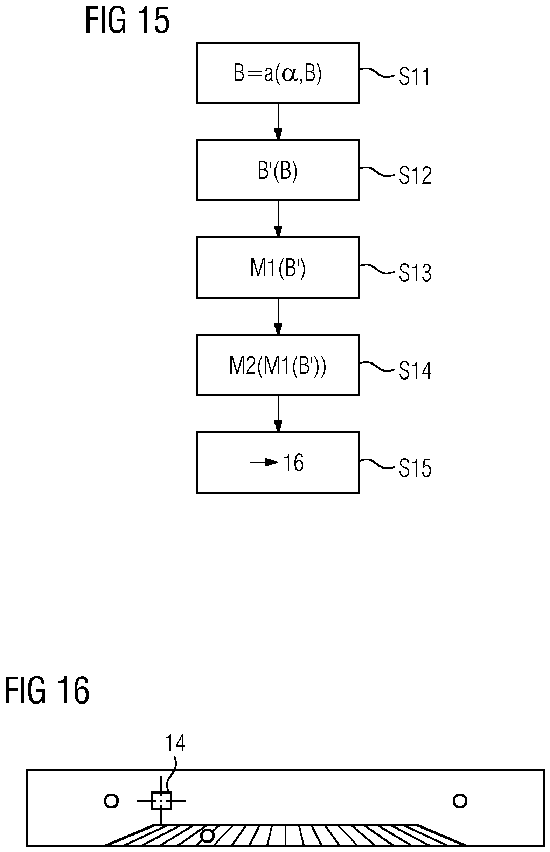

Die obenstehend in Verbindung mit den FIG 9 bis 14 erläuterte Art und Weise der Auswertung des Tiefenbildes B ist nicht die einzig mögliche. Rein beispielhaft wird nachstehend in Verbindung mit den FIG 15 bis 20 eine weitere Art und Weise der Auswertung des Tiefenbildes B erläutert.

Gemäß FIG 15 nimmt die Auswertungseinrichtung 11 in einem Schritt S11 ein Tiefenbild B entgegen. Der Schritt S11 entspricht dem Schritt S1 von FIG 9.

In einem Schritt S12 ermittelt die Auswertungseinrichtung 11 diejenigen Winkelpaare α, β des Tiefenbildes B, bei denen der jeweils ermittelte Abstand a unterhalb eines vorbestimmten Minimalabstands amin liegt. Für diese Winkelpaare α, β wird der Wert 0 angesetzt, für die anderen Winkelpaare α, β der Wert 1. Das Tiefenbild B wird also binarisiert. Bezüglich des Minimalabstands amin sind die obigen Ausführungen, die in Verbindung mit dem Schritt S3 von FIG 9 getroffen wurden, in analoger Weise anwendbar. Das nunmehr ermittelte Bild B' ist ein weiteres Beispiel eines aus dem erfassten Tiefenbild B abgeleiteten Bildes.

FIG 16 zeigt rein beispielhaft ein mögliches binarisiertes Bild B'. Schraffiert sind in FIG 16 diejenigen Bereiche eingezeichnet, die auf 0 gesetzt sind.

In einem Schritt S13 unterzieht die Auswertungseinrichtung 11 das Bild B' einer ersten mathematischen morphologischen Operation M1. Durch die erste mathematische morphologische Operation M1 werden in dem Bild B' Objekte ausgefiltert, deren Abstand a oberhalb des vorbestimmten Minimalwertes liegt und die weiterhin eine Größe unterhalb einer ersten Minimalgröße aufweisen. Die erste mathematische morphologische Operation M1 kann insbesondere aus zwei nacheinander ausgeführten Teilschritten bestehen.

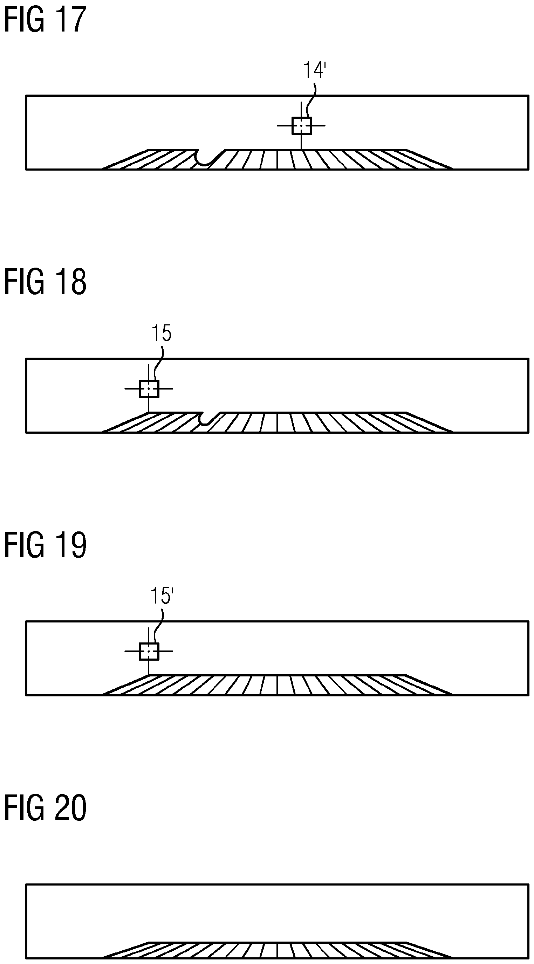

Ebenso wie beim Schritt S6 von FIG 9 ist der erste Teilschritt eine morphologische Dilatation oder eine morphologische Erosion. Beispielsweise kann für jedes Wertepaar der Winkel α, β der Wert auf 1 gesetzt werden, sofern innerhalb eines ersten Filterkerns 14 um dieses Wertepaar herum der Wert 1 mindestens einmal auftritt. Nur anderenfalls bleibt der Wert 0 erhalten. Dieser modifizierte Wert wird als Wert für den zweiten Teilschritt herangezogen. FIG 17 zeigt rein beispielhaft ein mögliches Ergebnis des ersten Teilschrittes.

Der erste Filterkern 14 weist üblicherweise eine relativ geringe Größe auf. Beispielsweise können - ausgehend vom jeweiligen Wertepaar der Winkel α, β - zu kleineren und größeren Werten des ersten Winkels α und des zweiten Winkels β zusätzlich je zwei oder je drei weitere Werte für den ersten Winkel α und/oder den zweiten Winkel β mit herangezogen werden. In aller Regel ist der erste Filterkern 14 jedoch - im Gegensatz zur Vorgehensweise gemäß FIG 9, bei welcher der erste Filterkern 14 stets eindimensional ist - zweidimensional. In Einzelfällen kann aber auch im Rahmen der Vorgehensweise von FIG 15 der erste Filterkern 14 eindimensional sein.

Der zweite Teilschritt ist wieder invers zum ersten Teilschritt. Wenn der erste Teilschritt eine morphologische Dilatation ist, ist der zweite Teilschritt eine morphologische Erosion. Wenn umgekehrt der erste Teilschritt eine morphologische Erosion ist, ist der zweite Teilschritt eine morphologische Dilatation. Wenn also beispielsweise im ersten Teilschritt für jedes Wertepaar der Winkel α, β der Wert auf 1 gesetzt wurde, sofern innerhalb eines ersten Filterkerns 14 um dieses Wertepaar herum der Wert 1 mindestens einmal auftrat, wird nunmehr für jedes Wertepaar der Winkel α, β der Wert auf 0 gesetzt, sofern innerhalb eines Filterkerns 14' um dieses Wertepaar herum der Wert 0 mindestens einmal auftritt. Nur anderenfalls bleibt der Wert 1 erhalten. In jedem Fall aber wird im Rahmen des zweiten Teilschrittes ein Filterkern 14' verwendet, der dieselbe Größe aufweist wie der Filterkern 14 beim ersten Teilschritt. FIG 18 zeigt rein beispielhaft ein mögliches Ergebnis nach dem zweiten Teilschritt der ersten mathematischen morphologischen Operation M1. Ersichtlich erfolgt - ebenso wie bei der Vorgehensweise gemäß FIG 9 - durch die erste mathematische morphologische Operation M1 eine deutliche Glättung.

Mittels der ersten mathematischen morphologischen Operation M1 werden Störungen ausgefiltert, bei denen der Laserstrahl 9 an kleinen Objekten - beispielsweise Regentropfen oder Schneeflocken - zum Laserscanner 8 zurück reflektiert wurde. Das Ausfiltern derartiger Störungen erfolgt jedoch nur bis zu einer ersten Maximalgröße der Störungen. Diese Größe ist wie zuvor bei der Vorgehensweise von FIG 9 durch die Größe der ersten Filterkerne 14, 14' bestimmt.

Die Kontur des Geschirrs 5 und des Containers 6 ist damit vom Ansatz her bestimmt. Die exakte Kontur kann wie zuvor bestimmt werden. Derartige Vorgehensweisen sind Fachleuten allgemein bekannt.

Mittels der ersten mathematischen morphologischen Operation M1 werden hingegen wie zuvor noch keine Störungen ausgefiltert, bei denen der Laserstrahl 9 am Container 6 oder am Geschirr 5 derart reflektiert wurde, dass er nicht direkt zum Laserscanner 8 zurück reflektiert wurde, sondern erst nach einer weiteren Reflexion oder Streuung an einem anderen Objekt zum Laserscanner 8 zurück reflektiert wurde.

Zur Unterdrückung derartiger Reflexionen und damit im Ergebnis einer Unterdrückung einer Erkennung von weiteren Objekten innerhalb von durch die ermittelte Kontur definierten Bereichen unterzieht die Auswertungseinrichtung 11 das im Schritt S13 ermittelte Bild in einem Schritt S14 einer zweiten mathematischen morphologischen Operation M2. Durch die zweite mathematische morphologische Operation M2 werden die entsprechenden weiteren Objekte unterdrückt.

Die zweite mathematische morphologische Operation M2 kann - analog zur ersten mathematischen morphologischen Operation M1 - insbesondere aus zwei nacheinander ausgeführten Teilschritten bestehen. In diesem Fall ist - wie zuvor bei der ersten mathematischen morphologischen Operation M1 - der erste Teilschritt eine morphologische Dilatation oder eine morphologische Erosion und der zweite Teilschritt die inverse Operation. Im Unterschied zur ersten mathematischen morphologischen Operation M1 werden entsprechend der Darstellung in den FIG 18 und 19 jedoch zweite Filterkerne 15, 15' verwendet. Weiterhin ist die Reihenfolge der beiden Teilschritte invers zu der Reihenfolge der beiden Teilschritte der ersten mathematischen morphologischen Operation M1. FIG 19 zeigt rein beispielhaft ein mögliches Ergebnis nach dem ersten Teilschritt der zweiten mathematischen morphologischen Operation M2, FIG 20 ein mögliches Ergebnis nach dem zweiten Teilschritt der zweiten mathematischen morphologischen Operation M2. Ersichtlich erfolgt durch die zweite mathematische morphologische Operation M2 eine weitere Glättung.

Die zweiten Filterkerne 15, 15' weisen untereinander eine einheitliche Größe auf. Sie können im Einzelfall dieselbe Größe aufweisen wie die ersten Filterkerne 14, 14'. Im Regelfall weisen die zweiten Filterkerne 15, 15' jedoch eine andere Größe auf als die erste Filterkerne 14, 14'. Insbesondere können sie größer als die ersten Filterkerne 14, 14' sein.

Mittels der zweiten mathematischen morphologischen Operation M2 wird ebenso wie bei der Vorgehensweise gemäß FIG 9 die Erkennung von weiteren Objekten innerhalb von durch die ermittelte Kontur definierten Bereichen unterdrückt. Die Unterdrückung der weiteren Objekte erfolgt nur bis zu einer zweiten Maximalgröße der weiteren Objekte. Diese Größe ist durch die Größe der zweiten Filterkerne 15, 15' bestimmt.

Mittels der zweiten mathematischen morphologischen Operation M2 werden also diejenigen Störungen ausgefiltert, bei denen der Laserstrahl 9 am Container 6 oder am Geschirr 5 derart reflektiert wurde, dass er nicht direkt zum Laserscanner 8 zurück reflektiert wurde, sondern erst nach einer weiteren Reflexion oder Streuung an einem anderen Objekt zum Laserscanner 8 zurück reflektiert wurde. Das nunmehrige Ergebnis enthält somit nunmehr - zumindest in der Regel - insbesondere keine fehlerhaft erkannten scheinbaren Objekte, die nur aufgrund von Reflexionen am Container 6 oder am Geschirr 5 entstanden sein können.

Aufgrund des Umstands, dass die Reihenfolge von Erosion und Dilatation im Rahmen der zweiten mathematischen morphologischen Operation M2 invers zu der Reihenfolge von Erosion und Dilatation im Rahmen der ersten mathematischen morphologischen Operation M1 ist, wirkt die zweite mathematische morphologische Operation M2 jedoch im Ergebnis nur innerhalb der Kontur, die im Rahmen der ersten mathematischen morphologischen Operation M1 ermittelt wurde.

Die Auswertungseinrichtung 11 übermittelt ihre Ergebnisse in einem Schritt S15 an die Steuereinrichtung 16 des Containerkrans. Der Schritt S15 korrespondiert mit dem Schritt S8 von FIG 9.

Es sind auch andere Vorgehensweisen möglich. Beispiele derartiger Vorgehensweisen sind eine Vektorisierung oder eine Kantendetektion, sogenannte Snakes, ein Region Labeling, eine Konturextraktion und andere mehr.

Zusammengefasst betrifft die vorliegende Erfindung somit folgenden Sachverhalt:
Ein Containerkran weist eine Laufkatze 4 auf, die auf einer Traverse 3 eines Portals 1 des Containerkrans verfahrbar ist. An der Laufkatze 4 sind ein Geschirr 5 zum Aufnehmen und Absetzen eines Containers 6 sowie mindestens ein Laserscanner 8 angeordnet. Mittels des Laserscanners 8 wird ein Tiefenbild B erfasst, das als Funktion eines ersten und einen zweiten Winkels α, β jeweils den Abstand a von dem Laserscanner 8 mittels eines Laserstrahls 9 erfassten Objektpunkten 10 angibt. Das erfasste Tiefenbild B wird ausgewertet, so dass anhand der Objektpunkte 10 Objekte erkannt werden und deren Orte ermittelt werden. Die Objekte umfassen das Geschirr 5 und/oder einen von dem Geschirr 5 aufgenommenen Container 6 und weitere Objekte 7, 12, 13. Anhand der erfassten Objektpunkte 10 wird die Kontur des Geschirrs 5 und/oder des von dem Geschirr 5 aufgenommenen Containers 6 ermittelt und eine Erkennung der weiteren Objekte 7, 12, 13 innerhalb von durch die ermittelte Kontur definierten Bereichen unterdrückt. Eine Steuereinrichtung 16 des Containerkrans berücksichtigt im Rahmen der Steuerung des Containerkrans die erkannten Objekte und deren Orte.

Die vorliegende Erfindung weist viele Vorteile auf. Insbesondere führt sie in nahezu allen Fällen zu einer zuverlässigen Ermittlung des Geschirrs 5 und des Containers 6 und weiterhin zu einer nahezu vollständigen Unterdrückung von Reflexionen. Dies gilt sogar dann, wenn beispielsweise aufgrund von Regen oder Schneefall Störungen auftreten oder beispielsweise aufgrund einer lackierten oder regennassen Containerwand verstärkt Reflexionen auftreten. Manuelle Eingriffe durch eine Bedienperson sind kaum noch erforderlich. Eine Beschränkung des Messbereichs, auf Bereiche, in denen sich das Geschirr 5 und der Container 6 mit Sicherheit nicht befinden, kann vermieden werden. Dies ist insbesondere deshalb von Vorteil, weil der Bereich, in dem sich das Geschirr 5 und/oder der Container 6 befinden können, aufgrund eines möglicherweise auftretenden sogenannten Skews (d.h. eines Verdrehens des Geschirrs 5 und/oder des Containers 6 um die Hochachse) relativ groß ist.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für einen Containerkran, wobei der Containerkran eine Laufkatze (4) aufweist, die auf einer Traverse (3) eines Portals (1) des Containerkrans verfahrbar ist, wobei an der Laufkatze (4) ein Geschirr (5) zum Aufnehmen und Absetzen eines Containers (6) angeordnet ist, wobei an der Laufkatze (4) mindestens ein Laserscanner (8) angeordnet ist,
- wobei mittels des Laserscanners (8) ein Tiefenbild (B) erfasst wird, das als Funktion eines ersten und einen zweiten Winkel (α, β) jeweils den Abstand (a) von dem Laserscanner (8) mittels eines Laserstrahls (9) erfassten Objektpunkten (10) angibt,
- wobei das erfasste Tiefenbild (B) mittels einer Auswertungseinrichtung (11) ausgewertet wird, so dass anhand der Objektpunkte (10) Objekte erkannt werden und deren Orte ermittelt werden,
- wobei die Objekte das Geschirr (5) und/oder einen von dem Geschirr (5) aufgenommenen Container (6) und weitere Objekte (7, 12, 13) umfassen,
- wobei anhand der erfassten Objektpunkte (10) die Kontur des Geschirrs (5) und/oder des von dem Geschirr (5) aufgenommenen Containers (6) ermittelt wird und eine Erkennung der weiteren Objekte (7, 12, 13) innerhalb von durch die ermittelte Kontur definierten Bereichen unterdrückt wird und
- wobei eine Steuereinrichtung (16) des Containerkrans im Rahmen der Steuerung des Containerkrans die erkannten Objekte und deren Orte berücksichtigt.

2. Betriebsverfahren nach Anspruch 1,
**dadurch gekennzeichnet,**
**dass** das erfasste Tiefenbild (B) oder ein daraus abgeleitetes Bild (B') zunächst einer ersten mathematischen morphologischen Operation (M1) unterzogen wird, so dass in dem erfassten Tiefenbild (B) oder dem daraus abgeleiteten Bild (B') Objekte mit einer Größe unterhalb einer ersten Maximalgröße ausgefiltert werden, und dass sodann die Ermittlung der Kontur des Geschirrs (5) und/oder des von dem Geschirr (5) aufgenommenen Containers (6) anhand des der ersten morphologischen Operation (M1) unterzogenen Bildes erfolgt.

3. Betriebsverfahren nach Anspruch 2,
**dadurch gekennzeichnet,**
**dass** die erste mathematische morphologische Operation (M1) eine morphologische Dilatation und eine auf die morphologische Dilatation folgende morphologische Erosion oder eine morphologische Erosion und eine auf die morphologische Erosion folgende morphologische Dilatation ist und dass zur morphologischen Dilatation als auch zur morphologischen Erosion erste Filterkerne (14, 14') gleicher Größe verwendet werden.

4. Betriebsverfahren nach Anspruch 3,
**dadurch gekennzeichnet,**
**dass** zum Unterdrücken der Erkennung der weiteren Objekte (7, 12, 13) innerhalb der durch die ermittelte Kontur definierten Bereiche das der ersten mathematischen morphologischen Operation (M1) unterzogene Bild einer zweiten mathematischen morphologischen Operation (M2) unterzogen wird, so dass in dem der ersten mathematischen morphologischen Operation (M1) unterzogenen Bild Objekte mit einer Größe unterhalb einer zweiten Maximalgröße ausgefiltert werden.

5. Betriebsverfahren nach Anspruch 4,
**dadurch gekennzeichnet,**
**dass** die zweite mathematische morphologische Operation (M2) eine morphologische Dilatation und eine auf die morphologische Dilatation folgende morphologische Erosion oder eine morphologische Erosion und eine auf die morphologische Erosion folgende morphologische Dilatation ist, dass zur morphologischen Dilatation als auch zur morphologischen Erosion der zweiten mathematischen morphologischen Operation (M2) zweite Filterkerne (15, 15') gleicher Größe verwendet werden und dass die Reihenfolge von morphologischer Erosion und morphologischer Dilatation im Rahmen der zweiten mathematischen morphologischen Operation (M2) invers zu der Reihenfolge von morphologischer Erosion und morphologischer Dilatation im Rahmen der ersten mathematischen morphologischen Operation (M1) ist.

6. Betriebsverfahren nach Anspruch 5,
**dadurch gekennzeichnet,**
**dass** die zweiten Filterkerne (15, 15') eine andere Größe aufweisen als die ersten Filterkerne (14, 14'), insbesondere eine größere Größe aufweisen als die ersten Filterkerne (14, 14').

7. Betriebsverfahren nach einem der obigen Ansprüche,
**dadurch gekennzeichnet,**
**dass** es ausgeführt wird, während es in der Umgebung des Containerkrans regnet oder schneit.

8. Containerkran,
- wobei der Containerkran eine Laufkatze (4) aufweist, die auf einer Traverse (3) eines Portals (1) des Containerkrans verfahrbar ist,
- wobei an der Laufkatze (4) ein Geschirr (5) zum Aufnehmen und Absetzen eines Containers (6) angeordnet ist,
- wobei an der Laufkatze (4) mindestens ein Laserscanner (8) angeordnet ist, mittels dessen ein Tiefenbild (B) erfassbar ist, das als Funktion eines ersten und einen zweiten Winkels (α, β) jeweils den Abstand (a) von dem Laserscanner (8) mittels eines Laserstrahls (9) erfassten Objektpunkten (10) angibt,
- wobei der Containerkran eine Auswertungseinrichtung (11) aufweist, von der das erfasste Tiefenbild (B) derart ausgewertet wird, dass anhand der Objektpunkte (10) Objekte erkannt werden und deren Orte ermittelt werden,
- wobei die Objekte das Geschirr (5) und/oder einen von dem Geschirr (5) aufgenommenen Container (6) und weitere Objekte (7, 12, 13) umfassen,
- wobei die Auswertungseinrichtung (11) derart ausgebildet ist, dass sie anhand der erfassten Objektpunkte (10) die Kontur des Geschirrs (5) und/oder des von dem Geschirr (5) aufgenommenen Containers (6) ermittelt und eine Erkennung der weiteren Objekte (7, 12, 13) innerhalb von durch die ermittelte Kontur definierten Bereichen unterdrückt, und
- wobei der Containerkran eine Steuereinrichtung (16) aufweist, welche im Rahmen der Steuerung des Containerkrans die erkannten Objekte und deren Orte berücksichtigt.

9. Containerkran nach Anspruch 8,
**dadurch gekennzeichnet,**
**dass** die Auswertungseinrichtung (11) derart ausgebildet ist, dass sie das erfasste Tiefenbild (B) oder ein daraus abgeleitetes Bild (B') zunächst einer ersten mathematischen morphologischen Operation (M1) unterzieht, so dass in dem erfassten Tiefenbild (B) oder dem daraus abgeleiteten Bild (B') Objekte mit einer Größe unterhalb einer ersten Maximalgröße ausgefiltert werden, und sodann die Kontur des Geschirrs (5) und/oder des von dem Geschirr (5) aufgenommenen Containers (6) anhand des der ersten morphologischen Operation (M1) unterzogenen Bildes ermittelt.

10. Containerkran nach Anspruch 9,
**dadurch gekennzeichnet,**
**dass** die erste mathematische morphologische Operation (M1) eine morphologische Dilatation und eine auf die morphologische Dilatation folgende morphologische Erosion oder eine morphologische Erosion und eine auf die morphologische Erosion folgende morphologische Dilatation ist und dass zur morphologischen Dilatation als auch zur morphologischen Erosion erste Filterkerne (14, 14') gleicher Größe verwendet werden.

11. Containerkran nach Anspruch 10,
**dadurch gekennzeichnet,**
**dass** die Auswertungseinrichtung (11) derart ausgebildet ist, dass sie zum Unterdrücken der Erkennung der weiteren Objekte (7, 12, 13) innerhalb der durch die ermittelte Kontur definierten Bereiche das der ersten mathematischen morphologischen Operation (M1) unterzogene Bild einer zweiten mathematischen morphologischen Operation (M2) unterzieht, so dass in dem der ersten mathematischen morphologischen Operation (M1) unterzogenen Bild Objekte mit einer Größe unterhalb einer zweiten Maximalgröße ausgefiltert werden.

12. Containerkran nach Anspruch 11,
**dadurch gekennzeichnet,**
**dass** die zweite mathematische morphologische Operation (M2) eine morphologische Dilatation und eine auf die morphologische Dilatation folgende morphologische Erosion oder eine morphologische Erosion und eine auf die morphologische Erosion folgende morphologische Dilatation ist, dass zur morphologischen Dilatation als auch zur morphologischen Erosion der zweiten mathematischen morphologischen Operation (M2) zweite Filterkerne (15, 15') gleicher Größe verwendet werden und dass die Reihenfolge von morphologischer Erosion und morphologischer Dilatation im Rahmen der zweiten mathematischen morphologischen Operation (M2) invers zu der Reihenfolge von morphologischer Erosion und morphologischer Dilatation im Rahmen der ersten mathematischen morphologischen Operation (M1) ist.

13. Containerkran nach Anspruch 12,
**dadurch gekennzeichnet,**
**dass** die zweiten Filterkerne (15, 15') eine andere Größe aufweisen als die ersten Filterkerne (14, 14'), insbesondere eine größere Größe aufweisen als die ersten Filterkerne (14, 14').

## Claims

1. Operating method for a container crane, wherein the container crane has a trolley (4) which can be moved on a cross-member (3) of a gantry (1) of the container crane, wherein a harness (5) for picking up and setting down a container (6) is arranged on the trolley (4), wherein at least one laser scanner (8) is arranged on the trolley (4),
- wherein by means of the laser scanner (8) a depth image (B) is captured which, as a function of a first and a second angle (α, β) in each case indicates the distance (a) of object points (10) detected by the laser scanner (8) by means of a laser beam (9),
- wherein the captured depth image (B) is evaluated by means of an evaluation facility (11) such that, based on the object points (10), objects are detected, and the locations thereof are determined,
- wherein the objects comprise the harness (5) and/or a container (6) picked up by the harness (5), and further objects (7, 12, 13),
- wherein based on the detected object points (10), the contour of the harness (5) and/or the container (6) picked up by the harness (5) is determined, and detection of the further objects (7, 12, 13) within areas defined by the determined contour is suppressed and
- wherein a control facility (16) of the container crane takes the detected objects and the locations thereof into account in the context of controlling the container crane.

2. Operating method according to claim 1,
**characterised in that**
the captured depth image (B) or an image (B') derived therefrom is first subjected to a first mathematical morphological operation (M1) such that in the captured depth image (B) or the image (B') derived therefrom objects having a size beneath a first maximum size are filtered out, and that the determination of the contour of the harness (5) and/or the container (6) picked up by the harness (5) takes place based on the image subjected to the first morphological operation (M1).

3. Operating method according to claim 2,
**characterised in that**
the first mathematical morphological operation (M1) is a morphological dilatation and a morphological erosion following the morphological dilatation or a morphological erosion and a morphological dilatation following the morphological erosion and that first filter cores (14, 14') of the same size are used for morphological dilatation as well as morphological erosion.

4. Operating method according to claim 3,
**characterised in that**
to suppress the detection of the further objects (7, 12, 13) within the areas defined by the determined contour, the image subjected to the first mathematical morphological operation (M1) is subjected to a second mathematical morphological operation (M2) such that in the image subjected to the first mathematical morphological operation (M1), objects having a size below a second maximum size are filtered out.

5. Operating method according to claim 4,
**characterised in that**
the second mathematical morphological operation (M2) is a morphological dilatation and a morphological erosion following the morphological dilatation or a morphological erosion and a morphological dilatation following the morphological erosion, that for morphological dilatation as well as for morphological erosion of the second mathematical morphological operation (M2) second filter cores (15, 15') of the same size are used and that the sequence of morphological erosion and morphological dilatation in the context of the second mathematical morphological operation (M2) is inverse to the sequence of morphological erosion and morphological dilatation in the context of the first mathematical morphological operation (M1).

6. Operating method according to claim 5,
**characterised in that**
the second filter cores (15, 15') are a different size from the first filter cores (14, 14'), in particular, are a larger size than the first filter cores (14, 14').

7. Operating method according to one of the preceding claims,
**characterised in that**
it is performed while it is raining or snowing in the vicinity of the container crane.

8. Container crane,
- wherein the container crane has a trolley (4) which can be moved on a cross-member (3) of a gantry (1) of the container crane,
- wherein a harness (5) for picking up and setting down a container (6) is arranged on the trolley (4),
- wherein at least one laser scanner (8) is arranged on the trolley (4) by means of which a depth image (B) can be captured which, as a function of a first and a second angle (α, β), in each case indicates the distance (a) of object points (10) detected by the laser scanner (8) by means of a laser beam (9),
- wherein the container crane has an evaluation facility (11) by which the captured depth image (B) is evaluated such that, based on the object points (10), objects are detected, and the locations thereof are determined,
- wherein the objects comprise the harness (5) and/or a container (6) picked up by the harness (5) and further objects (7, 12, 13),
- wherein the evaluation facility (11) is designed such that, based on the captured object points (10), the contour of the harness (5) and/or of the container (6) picked up by the harness (5) is determined, and detection of the further objects (7, 12, 13) within areas defined by the determined contour is suppressed, and
- wherein the container crane has a control facility (16) which takes into account the detected objects and the locations thereof in the context of controlling the container crane.

9. Container crane according to claim 8,
**characterised in that**
the evaluation facility (11) is designed such that it first subjects the captured depth image (B) or an image (B') derived therefrom to a first mathematical morphological operation (M1), such that in the captured depth image (B) or the image (B') derived therefrom objects having a size below a first maximum size are filtered out, and then the contour of the harness (5) and/or the container (6) picked up by the harness (5) is determined on the basis of the image subjected to the first morphological operation (M1).

10. Container crane according to in claim 9,
**characterised in that**
the first mathematical morphological operation (M1) is a morphological dilatation and a morphological erosion following the morphological dilatation or a morphological erosion and a morphological dilatation following the morphological erosion and that first filter cores (14, 14') of the same size are used for morphological dilatation as well as for morphological erosion.

11. Container crane according to claim 10,
**characterised in that**
the evaluation facility (11) is designed in such a way that, in order to suppress the detection of the further objects (7, 12, 13) within the areas defined by the determined contour, it subjects the image subjected to the first mathematical morphological operation (M1) to a second mathematical morphological operation (M2), such that objects having a size below a second maximum size are filtered out in the image subjected to the first mathematical morphological operation (M1).

12. Container crane according to claim 11,
**characterised in that**
the second mathematical morphological operation (M2) is a morphological dilatation and a morphological erosion following the morphological dilatation or a morphological erosion and a morphological dilatation following the morphological erosion, that second filter cores (15, 15') of the same size are used for morphological dilatation as well as for morphological erosion of the second mathematical morphological operation (M2), and that the sequence of morphological erosion and morphological dilatation in the context of the second mathematical morphological operation (M2) is inverse to the sequence of morphological erosion and morphological dilatation in the context of the first mathematical morphological operation (M1).

13. Container crane according to claim 12,
**characterised in that**
the second filter cores (15, 15') are of a different size from the first filter cores (14, 14'), in particular are of a larger size than the first filter cores (14, 14').

## Revendications

1. Procédé pour faire fonctionner une grue à conteneur, dans lequel la grue à conteneur a un palonnier (4), qui peut être déplacé sur une traverse (3) d'un portique (1) de la grue à conteneur, dans lequel un cadre (5) de réception et de dépôt d'un conteneur (6) est monté sur le palonnier (4), dans lequel au moins un scanner (8) laser est monté sur le palonnier (4),
- dans lequel on prend, au moyen du scanner (8) laser, une image (B) de profondeur, qui indique, en fonction d'un premier et d'un deuxième angles (a, β), respectivement la distance (a) de points (10) objets pris par le scanner (8) laser, au moyen d'un faisceau (9) laser,
- dans lequel on analyse l'image (B) de profondeur prise au moyen d'un dispositif (11) d'analyse, de manière à pouvoir détecter des objets, au moyen des points (10) objets et déterminer leurs emplacements,
- dans lequel les objets comprennent le cadre (5) et/ou un conteneur (6) et d'autres objets (7, 12, 13) pris par le cadre (5),
- dans lequel on détermine, à l'aide des points (10) objets détectés, le contour du cadre (5) et/ou du conteneur (6) pris par le cadre (5), et on supprime une détection des autres objets (7, 12, 13) dans des régions définies par le contour déterminé et
- dans lequel un dispositif (16) de commande de la grue à conteneur tient compte, dans le cadre de la commande de la grue à conteneur, des objets détectés et de leurs emplacements.

2. Procédé suivant la revendication 1,
**caractérisé en ce que**
l'on soumet l'image (B) de profondeur prise ou une image (B'), qui s'en déduit, d'abord à une première opération (M1) morphologique mathématique, de manière à éliminer dans l'image (B) de profondeur prise ou dans l'image (B'), qui s'en déduit, par filtrage des objets ayant une dimension inférieure à une première dimension maximum et **en ce qu'**ensuite, on effectue à l'aide de l'image soumise à la première opération (M1) morphologique, la détermination du contour du cadre (5) et/ou du conteneur (6) pris par le cadre (5).

3. Procédé suivant la revendication 2,
**caractérisé en ce que**
la première opération (M1) morphologique mathématique est une dilatation morphologique et une érosion morphologique suivant la dilatation morphologique ou une érosion morphologique et une dilation morphologique suivant l'érosion morphologique, et **en ce que**, tant pour la dilation morphologique qu'également pour l'érosion morphologique, on utilise des premiers noyaux (14, 14') de filtre de même dimension.

4. Procédé suivant la revendication 3,
**caractérisé en ce que**,
pour la suppression de la détection des autres objets (7, 12, 13) à l'intérieur des régions définies par le contour déterminé, on soumet l'image, soumise à la première opération (M1) morphologique mathématique, à une deuxième opération (M2) morphologique mathématique, de manière à séparer par filtrage dans l'image, soumise à la première opération (M1) morphologique mathématique, des objets ayant une dimension inférieure à une deuxième dimension maximum.

5. Procédé suivant la revendication 4,
**caractérisé en ce que**
la deuxième opération (M2) morphologique mathématique est une dilatation morphologique et une érosion morphologique suivant la dilatation morphologique, ou une érosion morphologique et une dilation morphologique suivant l'érosion morphologique, **en ce que**, tant pour la dilatation morphologique qu'également pour l'érosion morphologique de la deuxième opération (M2) morphologique mathématique, on utilise des deuxièmes noyaux (15, 15') de filtre de même dimension, et **en ce que** la suite de l'érosion morphologique et de la dilatation morphologique, dans le cadre de la deuxième opération (M2) morphologique mathématique, est l'inverse de la suite de l'érosion morphologique de la dilatation morphologique, dans le cadre de la première opération (M1) morphologique dans la durée.

6. Procédé suivant la revendication 5,
**caractérisé en ce que**
les deuxièmes noyaux (15, 15') de filtre ont une dimension autre que les premiers noyaux (14, 14') de filtre, en ayant notamment une dimension plus grande que les premiers noyaux (14, 14') de filtre.

7. Procédé suivant l'une des revendications précédentes, **caractérisé en ce que**
il est exécuté, pendant qu'il pleut ou qu'il neige, dans l'environnement de la grue à conteneur.

8. Grue à conteneur,
- dans laquelle la grue à conteneur a un palonnier (4), qui peut être déplacé sur une traverse (3) d'un portique (1) de la grue à conteneur,
- dans laquelle un cadre (5) de réception et de dépôt d'un conteneur (6) est monté sur le palonnier (4),
- dans laquelle, sur le palonnier (4) est monté au moins un scanner (8) laser, au moyen duquel peut être prise une image (B) de profondeur qui, en fonction d'un premier et d'un deuxième angles (a, β), indique respectivement la distance (a) de points (10) objets détectés par le scanner (8) laser au moyen d'un faisceau (9) laser,
- dans laquelle la grue à conteneur a un dispositif (11) d'analyse, par lequel l'image (B) de profondeur prise est analysée, de manière à détecter des objets à l'aide des points (10) objets et à déterminer leurs emplacements,
- dans laquelle les objets comprennent le cadre (5) et/ou un conteneur (6) pris par le cadre (5) et d'autres objets (7, 12, 13),
- dans laquelle le dispositif (11) d'analyse est constitué de manière à déterminer, à l'aide des points (10) objets détectés, le contour du cadre (5) et/ou du conteneur (6) reçu par le cadre (5) et à supprimer une détection des autres objets (7, 12, 13) à l'intérieur d'une région définie par le contour déterminé, et
- dans laquelle la grue à conteneur a un dispositif (16) de commande, qui tient compte, dans le cadre de la commande de la grue à conteneur, des objets détectés et de leurs emplacements.

9. Grue à conteneur suivant la revendication 8,
**caractérisé en ce que**
le dispositif (11) d'analyse est constitué pour soumettre l'image (B) de profondeur prise ou une image (B'), qui s'en déduit, d'abord à une première opération (M1) morphologique mathématique, de manière à ce que, dans l'image (B) de profondeur prise ou dans l'image (B'), qui s'en déduit, des objets d'une dimension inférieure à une première dimension maximum soient éliminés par filtrage et ensuite à déterminer, à l'aide de l'image soumise à la première opération (M1) morphologique, le contour du cadre (5) et/ou du conteneur (6) pris par le cadre (5).

10. Grue à conteneur suivant la revendication 9,
**caractérisée en ce que**
la première opération (M1) morphologique mathématique est une dilatation morphologique et une érosion morphologique suivant la dilatation morphologique ou une érosion morphologique et une dilation morphologique suivant l'érosion morphologique, et **en ce que**, tant pour la dilation morphologique qu'également pour l'érosion morphologique, on utilise des premiers noyaux (14, 14') de filtre de même dimension.

11. Grue à conteneur suivant la revendication 10,
**caractérisée en ce que**
le dispositif (11) d'analyse est constitué de manière à, pour supprimer la détection des autres objets (7, 12, 13) à l'intérieur des régions définies par le contour déterminé, soumettre l'image soumise à la première opération (M1) morphologique mathématique à une deuxième opération (M2) morphologique mathématique, de manière à éliminer par filtrage dans l'image soumise à la première opération (M1) morphologique mathématique des objets d'une dimension inférieure à une deuxième dimension maximum.

12. Grue à conteneur suivant la revendication 11,
**caractérisée en ce que**
la deuxième opération (M2) morphologique mathématique est une dilatation morphologique et une érosion morphologique suivant la dilatation morphologique ou une érosion morphologique et une dilation morphologique suivant l'érosion morphologique, **en ce que** tant pour la dilatation morphologique qu'également pour l'érosion morphologique de la deuxième opération (M2) morphologique mathématique, on utilise des deuxièmes noyaux (15, 15') de filtre de même dimension, et **en ce que** la suite de l'érosion morphologique et de la dilatation morphologique, dans le cadre de la deuxième opération (M2) morphologique mathématique, est l'inverse de la suite de l'érosion morphologique de la dilatation morphologique, dans le cadre de la première opération (M1) morphologique dans la durée.

13. Grue à conteneur suivant la revendication 12,
**caractérisée en ce que**
les deuxièmes noyaux (15, 15') de filtre ont une dimension autre que les premiers noyaux (14, 14') de filtre, en ayant notamment une dimension plus grande que les premiers noyaux (14, 14') de filtre.
